# EUROPÄISCHE PATENTANMELDUNG

(11) **EP 4 349 630 A1**
(43) Veröffentlichungstag der Anmeldung: **10.04.2024**
(21) Anmeldenummer: 23199354.4
(22) Anmeldetag: 25.09.2023
(51) Int. Cl.: B60K 15/05

(54) **BETÄTIGUNGSMECHANISMUS ZUM BETÄTIGEN VON ABDECKUNGEN FÜR FAHRZEUGE**

(30) Priorität: 04.10.2022 DE 102022125527; 14.02.2023 DE 102023103567
(71) Anmelder: Illinois Tool Works Inc., Glenview IL 60025 (US)
(72) Erfinder: GÖPFERT, Tobias, Glenview, Illinois, 60025 (US); HEGWEIN, Matthias, Glenview, Illinois, 60025 (US); LECHNER-WATZLIK, Thomas, Glenview, Illinois, 60025 (US); OBERST, Joachim, Glenview, Illinois, 60025 (US); OCH, Roland, Glenview, Illinois, 60025 (US)
(74) Vertreter: Meissner Bolte Partnerschaft mbB

(57) **Zusammenfassung**

Die Erfindung betrifft einen Betätigungsmechanismus (1) zum Betätigen einer Abdeckung (2) eines Fahrzeugs, wobei die Abdeckung (2) reversibel zwischen einer Schließstellung und einer Offenstellung bewegbar ist, in welcher die Abdeckung (2) hinter der Fahrzeugaußenhaut (3) angeordnet ist. Der Betätigungsmechanismus (1) weist einen mit der Rückseite der Abdeckung (2) wirkverbundenen Bewegungsmechanismus (5) auf. Erfindungsgemäß ist der Bewegungsmechanismus (5) ausgebildet, ausgehend von der Schließstellung der Abdeckung (2) diese zunächst in einer überlagerten Dreh- und Translationsbewegung in eine Zwischenstellung zu bewegen, und dann ausgehend von der Zwischenstellung der Abdeckung (2) die Abdeckung (2) in einer rein-rotatorischen Bewegung in die Offenstellung zu verschwenken.

## Beschreibung

Die vorliegende Erfindung betrifft einen Betätigungsmechanismus zum Betätigen von Abdeckungen für Fahrzeuge, insbesondere Abdeckungen für Lade-, Serviceoder Tankklappen, oder Sensor- und insbesondere LIDAR-System-Abdeckungen.

Gemäß einem weiteren Aspekt der vorliegenden Erfindung betrifft diese eine Anordnung, insbesondere eine Sensor-, vorzugsweise LIDAR-System-Anordnung, oder eine Lade-, Service- oder Tankanordnung für Fahrzeuge, wobei die Anordnung unter anderem den erfindungsgemäßen Betätigungsmechanismus aufweist. Ferner betrifft die Erfindung ein Fahrzeug mit einer entsprechenden Sensor-, insbesondere LIDAR-System-Anordnung oder mit einer Lade-, Service- oder Tankanordnung.

Bewegliche Abdeckungen finden an verschiedenen Stellen im Fahrzeug Verwendung. Grundsätzlich dienen diese dazu, eine zu verdeckende Öffnung oder zu verdeckende Fläche in oder an einem Fahrzeug zu verdecken bzw. abzudecken. Insbesondere werden derartige Abdeckungen beispielsweise für Tank-, Lade-, Wasser- oder sonstige Serviceklappen verwendet. Beispielsweise verdecken Tank- bzw. Ladeklappen eine Tankmulde (oder Lademulde), die zum Betanken eines Fahrzeugs mit Kraftstoff oder beispielsweise einer Harnstofflösung bzw. zum Aufladen der Batterie eines Elektro- oder Hybridfahrzeugs dient.

Weiterhin verdecken entsprechende Abdeckungen Sensor-Systeme von Fahrzeugen, insbesondere LIDAR-Systeme.

Fahrzeuge mit modernen Assistenzsystemen umfassen oftmals LIDAR-Sensoren, welche beispielsweise dazu dienen, Objekte in der Umgebung des Fahrzeugs zu detektieren. Dazu werden von dem LIDAR-Sensor einzelne Lichtimpulse oder Laserstrahlen in die Umgebung ausgesendet. Üblicherweise senden LIDAR-Sensoren für automobile Anwendungen Laserstrahlen in einem für das menschliche Auge nicht sichtbaren Wellenlängenbereich aus. Dabei handelt es sich meist um Infrarotstrahlung mit einer Wellenlänge von 800 nm bis 2500 nm. Wird der einzelne Laserstrahl von einem Objekt in der Umgebung, beispielsweise einem Fahrzeug, zum LIDAR-Sensor zurückreflektiert, so kann anhand der Laufzeit des einzelnen Laserstrahls auf die Entfernung zwischen dem LIDAR-Sensor und dem Objekt geschlossen werden.

Um die Lichtimpulse oder Laserstrahlen in unterschiedliche Richtungen auszusenden, zu empfangen und zu einem Detektor zu führen, sind im Zusammenhang mit LIDAR-Sensoren gemäß dem Stand der Technik verschiedene Spiegelsysteme bekannt. Mit derartigen Spiegelsystemen kann der Lichtimpuls oder Laserstrahl in eine bestimmte Richtung der Umgebung gelenkt werden. Die Umgebung wird so mit mehreren tausend Lichtimpulsen oder Laserstrahlen abgetastet. Dazu ist es nötig, dass die Spiegelsysteme zum Empfangen der zum LIDAR-Sensor zurückreflektierten Laserstrahlen genau in Senderichtung ausgerichtet sind.

Aufgrund der notwendigen Präzision einer LIDAR-Sensor-Anordnung handelt es sich bei dieser Anordnung um eine konstruktiv aufwendige und kostspielige Einheit, so dass im abgestellten Zustand des Fahrzeugs die LIDAR-Anordnung möglichst geschützt und von außen nicht zugänglich aufbewahrt werden soll. Darüber hinaus soll die LIDAR-Anordnung im abgestellten Zustand des Fahrzeugs von äu-ßeren Einwirkungen oder der Temperatur, Luftfeuchtigkeit oder dergleichen geschützt sein. So ist es erstrebenswert, die LIDAR-Sensorik in einer Sensor-Mulde aufzunehmen, welche mit einer Abdeckung geschützt werden kann.

Derartige Abdeckungen sind typischerweise mit einem Scharnierarm eines Betätigungsmechanismus verbunden, der die entsprechende Klappe zwischen einer die Öffnung freigebenden Öffnungsstellung und einer die Öffnung verschließenden Schließstellung verschwenkbar ausbildet.

Bekannte Betätigungsmechanismen können dazu ausgebildet sein, die Abdeckungen auf verschiedene Weise zwischen der Schließstellung und der Offenstellung zu bewegen. So sind insbesondere Betätigungsmechanismen bekannt, welche die Abdeckung nach außen schwenken.

Nachteilig an solchen Betätigungsmechanismen ist neben einem häufig geringen Benutzerkomfort beim Abdecken und Freigeben insbesondere der relativ hohe Platzbedarf, beispielsweise von Elektrofahrzeugen bei einem Ladevorgang. Der hohe Platzbedarf ergibt sich daraus, dass die Abdeckungen beim Freigeben von Ladeanschlüssen in der Regel nach außen verschwenkt werden und in einem geöffneten Zustand häufig in einem 90°-Winkel vom Fahrzeug abstehen.

Die vom Fahrzeug abstehenden Abdeckungen stellen insbesondere für Fußgänger ein teilweise schwer erkennbares Hindernis dar, mit dem sie kollidieren können. Hierbei kann es nicht nur zu Personenschäden, sondern auch zu Schäden an der Abdeckung selber kommen. Zudem werden die vom Fahrzeug abstehenden Abdeckungen häufig Opfer von Vandalismus, da die Abdeckungen aufgrund ihres ungünstigen Winkels leicht von einem Fahrzeug abgeknickt werden können.

Darüber hinaus erhöhen abstehende Abdeckungen den Luftwiderstand des Fahrzeugs bei der Fahrt des Fahrzeugs, wenn die Abdeckungen beispielsweise im Zusammenhang mit einem LIDAR-Sensorsystem zum Einsatz kommen.

Insofern sind Betätigungsmechanismen bevorzugt, welche ausgebildet sind, die Abdeckung hinter die Fahrzeugaußenhaut zu bewegen und somit die Öffnung freigeben.

Beispielsweise ist in diesem Zusammenhang aus der Druckschrift
DE 20 2021 001 685 U1 ein Mechanismus bekannt, mit welchem eine Abdeckung ausgehend von einer Schließstellung diese zunächst in einer linearen Bewegung hinter die Fahrzeugkarosserie gezogen wird, wobei anschließend die Abdeckung in die Offenstellung hinter die Fahrzeugkarosserie verschwenkt wird. Für den Betätigungsmechanismus kommt ein Zahnradgetriebe mit einer Zahnstange zum Einsatz.

Der Nachteil des aus der Druckschrift DE 20 2021 001 685 U1 bekannte Mechanismus ist insbesondere darin zu sehen, dass das Zahnradgetriebe mit der zugehörigen Zahnstange in der Lademulde, das heißt im Nassbereich, zumindest bereichsweise angeordnet ist und somit Witterungseinflüssen unterworfen ist. Von daher weist der aus diesem Stand der Technik bekannte Mechanismus ein relativ hohes Verschleißverhalten auf. Insbesondere besteht die Gefahr, dass beispielsweise aufgrund einer Verschmutzung des Zahnradgetriebes oder aufgrund einer Abnutzung des Zahnradgetriebes die Bewegung der Abdeckung von der Schließstellung in die Offenstellung (und umgekehrt) nicht mehr vollständig realisierbar ist.

Ein weiterer Nachteil des aus der Druckschrift DE 20 2021 001 685 U1 bekannten Mechanismus ist insbesondere auch darin zu sehen, dass der Mechanismus - wenn überhaupt - nur bedingt in der Lage ist, eine vereiste Abdeckung von ihrer Schließstellung in die Offenstellung zu überführen. Wenn die Abdeckung in ihrer Schließstellung beispielsweise aufgrund von Eisregen etc. vereist, ist es nur mit Hilfe eines übermäßig erhöhten Kraftaufwands möglich, die Abdeckung von ihrer Schließstellung in die Offenstellung zu bewegen. Hierfür musste der Aktuator entsprechend dimensioniert sein, was wiederum einen erhöhten Bauraum voraussetzt, der häufig nicht vorliegt.

Auf Grundlage der genannten Problemstellung liegt somit der Erfindung die Aufgabe zu Grunde, ausgehend von der Druckschrift DE 20 2021 001 685 U1 als dem nächstkommenden Stand der Technik den hieraus bekannten Betätigungsmechanismus dahingehend zu optimieren, dass dieser bei einer einfachen Bauart ein komplexes Bewegungsmuster der Abdeckung ermöglicht, wobei insbesondere der Verschwenkmechanismus möglichst verschleißarm auch im Nassbereich arbeitet.

Zusätzlich soll eine wirkungsvolle Eisbrech-Funktion realisierbar sein, ohne dass hierfür die Komponenten und insbesondere der Antrieb des Verschwenkmechanismus größer auszuführen ist.

Die der Erfindung zu Grunde liegende Aufgabe wird insbesondere durch den Gegenstand des unabhängigen Patentanspruchs 1 gelöst, wobei vorteilhafte Weiterbildungen des erfindungsgemäßen Betätigungsmechanismus in den abhängigen Patentansprüchen angegeben sind.

Demgemäß betrifft die Erfindung insbesondere einen Betätigungsmechanismus zum Betätigen einer Abdeckung eines Fahrzeugs, wobei die Abdeckung reversibel zwischen einer Schließstellung, in welcher die Abdeckung insbesondere bündig und vorzugsweise strakbündig mit einer Fahrzeugkarosserie und insbesondere Fahrzeugaußenhaut angeordnet ist, und einer Offenstellung bewegbar ist, in welcher die Abdeckung zumindest teil- oder bereichsweise hinter der Fahrzeugkarosserie und insbesondere Fahrzeugaußenhaut angeordnet ist. Hierzu weist der Betätigungsmechanismus vorzugsweise einen Antrieb, insbesondere in Gestalt eines Elektromotors, mit einer Antriebswelle und einen insbesondere mit der Rückseite der Abdeckung und mit dem Antrieb wirkverbundenen Bewegungsmechanismus bzw. Gelenkmechanismus auf.

Demgemäß handelt es sich bei dem erfindungsgemäßen Betätigungsmechanismus um einen Betätigungsmechanismus, welcher in der Lage ist, eine Abdeckung oder Fahrzeugklappe zwischen einer Offenstellung und einer Schließstellung und umgekehrt zu bewegen, wobei der Betätigungsmechanismus insbesondere automatisch eine Öffnung in einer Fahrzeugkontur, beispielsweise einer Fahrzeugkarosserie, freilegen oder verschließen kann. Wie auch bei dem aus der Druckschrift DE 20 2021 001 685 U1 bekannten Betätigungsmechanismus kann innerhalb der Öffnung eine Schnittstelle vorgesehen sein, welche mit Bezug zur Fahrzeugkontur in Richtung Fahrzeuginneres zurückgesetzt, ortsfest fixiert am Fahrzeug angeordnet ist.

Insbesondere eignet sich somit der erfindungsgemäße Betätigungsmechanismus zum Betätigen einer Abdeckung in Gestalt einer Lade-, Service- oder Tankklappe eines Fahrzeugs. Alternativ hierzu eignet sich der erfindungsgemäße Betätigungsmechanismus zum Betätigen einer Klappe zur Sensor-Abdeckung eines Fahrzeugs, und insbesondere zur LIDAR-Systemabdeckung eines Fahrzeugs.

Gegenüber dem aus der Druckschrift DE 20 2021 001 685 U1 bekannten Betätigungsmechanismus zeichnet sich der erfindungsgemäße Betätigungsmechanismus dadurch aus, dass als Bewegungsmechanismus bzw. Gelenkmechanismus kein Zahnradgetriebe mit Zahnstange vorgesehen ist, welches zum Überführen der Abdeckung von ihrer Schließstellung in ihre Offenstellung zunächst die Abdeckung in einer linearen Bewegung in das Fahrzeuginnere heranzieht/bewegt und anschließend die Abdeckung rotatorisch hinter die Fahrzeugkarosserie bzw. Fahrzeugaußenhaut verschiebt.

Vielmehr ist bei dem erfindungsgemäßen Betätigungsmechanismus der Bewegungsmechanismus, welcher vorzugsweise als Gelenk- oder Führungsmechanismus ausgebildet ist, bei Betätigung des Antriebs ausgehend von der Schließstellung der Abdeckung diese zunächst in einer insbesondere nach dem Superpositionsprinzip überlagerten Dreh- und Translationsbewegung in eine Zwischenstellung zu bewegen, in welcher sich die Abdeckung in einer Stellung befindet, in welcher die Abdeckung relativ zu der Schließstellung der Abdeckung um eine erste Drehachse verschwenkt ist und sich insbesondere teil- oder bereichsweise hinter der Fahrzeugkarosserie und insbesondere Fahrzeugaußenhaut befindet. Insbesondere befindet sich die Abdeckung in der Zwischenstellung in einer zumindest teil- oder bereichsweise - im Vergleich zu der Schließstellung -in Richtung des Fahrzeuginneren zurückversetzten Stellung.

Der Bewegungsmechanismus bzw. Gelenkmechanismus ist ferner ausgebildet, bei einer weiteren Betätigung des Antriebs ausgehend von der zuvor genannten Zwischenstellung der Abdeckung diese anschließend in einer zumindest im Wesentlichen und vorzugsweise rein-rotatorischen Bewegung um eine zweite Drehachse in die Offenstellung zu verschwenken, in welcher die Abdeckung zumindest teiloder bereichsweise hinter der Fahrzeugkarosserie und insbesondere hinter der Fahrzeugaußenhaut angeordnet ist.

Die mit der erfindungsgemäßen Lösung erzielbaren Vorteile liegen auf der Hand: dadurch, dass bei Betätigung des Antriebs ausgehend von der Schließstellung der Abdeckung diese zunächst in einer insbesondere nach dem Superpositionsprinzip überlagerten Dreh- und Translationsbewegung in die Zwischenstellung bewegt wird, ist sichergestellt, dass der Dichtungsbereich zwischen der Abdeckung und dem Randbereich der von der Abdeckung abgedeckten Öffnung ungleichmäßig belastet wird. Mit anderen Worten, dadurch, dass die Abdeckung in einer insbesondere nach dem Superpositionsprinzip überlagerten Dreh- und Translationsbewegung in die Zwischenstellung bewegt wird, löst sich ein erster Bereich der Kante der Abdeckung schneller von dem Randbereich der Öffnung als ein gegenüberliegender Bereich der Abdeckung.

Auf diese Weise wird auf den Bereich der Abdeckung, der sich schneller von dem Randbereich der Öffnung löst, ein größeres Kraftmoment ausgeübt, in Folge dessen sicher eine ggf. vorhandene Vereisung gelöst werden kann, ohne dass hierzu der Aktuator entsprechend überdimensioniert ausgeführt werden muss. Dies ist ein wesentlicher Vorteil gegenüber dem beispielsweise aus der DE 20 2021 001 685 U1 bekannten Betätigungsmechanismus, bei welchem ausgehend von der Schließstellung der Abdeckung diese zunächst in einer reinen Translationsbewegung in die Zwischenstellung bewegt wird.

Andererseits ist nach wie vor sichergestellt, dass die Abdeckung hinsichtlich des Bewegungsablaufs stets im Fahrzeuginneren, das heißt zurückgesetzt von der Fahrzeugkontur, bewegt werden kann. Damit sind in jeder Bewegungsphase - wie auch bei dem aus der DE 20 2021 001 685 U1 bekannten Betätigungsmechanismus - aus der Fahrzeugkontur (Karosserie) hervorstehende Teil oder Störkanten vermeidbar. Insbesondere können Beschädigungen oder Verletzungen an oder durch die Abdeckung im geöffneten Zustand wirksam vermieden werden.

In der Schließstellung fluchtet die Abdeckung zur Fahrzeugkontur und schließt die Öffnung vorzugsweise strakbündig ab.

Um einen besonders kompakten Aufbau des Betätigungsmechanismus zu erzielen, ist gemäß Realisierungen der vorliegenden Erfindung vorgesehen, dass die erste Drehachse, um welche die Abdeckung in der insbesondere nach dem Superpositionsprinzip überlagerten Dreh- und Translationsbewegung in die Zwischenstellung bewegbar ist, mit der zweiten Drehachse übereinstimmt, um welche die Abdeckung ausgehend von ihrer Zwischenstellung in die Offenstellung verschwenkbar ist.

Insbesondere bietet es sich in diesem Zusammenhang an, dass die erste und vorzugsweise auch die zweite Drehachse mit einer Drehachse der Antriebswelle des Antriebs übereinstimmen.

Um den Innenbereich der mit der Abdeckung abdeckbaren Mulde vor Witterungseinflüssen und insbesondere vor Feuchtigkeit zu schützen, ist gemäß einem Aspekt der Erfindung vorgesehen, dass der Abdeckung eine insbesondere teil- oder bereichsweise die Abdeckung umlaufende Dichtung zugeordnet ist, welche ausgebildet ist, zumindest in der Schließstellung der Abdeckung einen Bereich zwischen der Abdeckung und der Fahrzeugkarosserie und insbesondere der Fahrzeugaußenhaut abzudichten.

Der Bewegungsmechanismus bzw. Gelenkmechanismus ist dabei insbesondere ausgebildet, bei Betätigung des Antriebs ausgehend von der Schließstellung der Abdeckung diese derart in der insbesondere nach dem Superpositionsprinzip überlagerten Dreh- und Translationsbewegung in die Zwischenstellung zu bewegen, dass sich die insbesondere teil- oder bereichsweise die Abdeckung umlaufende Dichtung in einem ersten Bereich der Dichtung schneller relativ zu der Abdeckung oder relativ zu der Fahrzeugkarosserie und insbesondere Fahrzeugaußenhaut bewegt als in einem insbesondere dem ersten Bereich der Dichtung gegenüberliegenden zweiten Bereich der Dichtung. Auf diese Weise wird wirkungsvoll eine Eisbrecher-Funktion realisiert.

Um in einer möglichst einfachen aber dennoch effektiven Weise den Bewegungsmechanismus bzw. Gelenkmechanismus des Betätigungsmechanismus zu realisieren, ist insbesondere vorgesehen, dass der Bewegungsmechanismus bzw. Gelenkmechanismus einen um die erste Drehachse drehbar gelagerten Hebel, insbesondere Ausdrückhebel, und einen Scharnierarm aufweist, wobei ein erster Endbereich des Scharnierarms vorzugsweise fest mit insbesondere der Rückseite der Abdeckung verbunden oder verbindbar ist, und wobei ein gegenüberliegender zweiter Endbereich des Scharnierarms gelenkig mit dem Hebel verbunden ist.

In diesem Zusammenhang bietet es sich an, dass zumindest über einen vorab festgelegten oder festlegbaren Winkelbereich der Scharnierarm über seinen zweiten Endbereich um eine dritte Drehachse relativ zu dem Hebel verschwenkbar ist, wobei die dritte Drehachse vorzugsweise parallel zu der ersten Drehachse verläuft, um den der Hebel drehbar gelagert ist.

Alternativ oder zusätzlich zu dem zuletzt genannten Aspekt ist es denkbar, dass der Hebel einen Mitnehmer aufweist, welcher ausgebildet ist, bei Bewegung des Hebels den Scharnierarm ebenfalls in Bewegung und insbesondere in Drehung zu versetzen.

Denkbar in diesem Zusammenhang ist es beispielsweise, dass der Mitnehmer ausgebildet ist, ausgehend von einer Ruheposition des Hebels, in welcher die Abdeckung in ihrer Schließstellung vorliegt, erst nach Verdrehung des Hebels um einen vorab festgelegten oder festlegbaren Winkelbereich um die erste Drehachse des Hebels in Kontakt mit dem Scharnierarm zu treten, wobei dann und bei einem weiteren Verdrehen des Hebels der Hebel zusätzlich mit dem Scharnierarm um die erste Drehachse des Hebels verschwenkt wird.

Auf diese Weise ist ohne die Verwendung eines Zahnradgetriebes der relativ komplexe Bewegungsablauf der Abdeckung in einer reproduzierbaren Weise realisierbar.

Denkbar in diesem Zusammenhang ist es insbesondere, dass nach Verdrehung des Hebels um den vorab festgelegten oder festlegbaren Winkelbereich um die erste Drehachse des Hebels die Abdeckung in ihrer Zwischenstellung vorliegt.

Grundsätzlich ist es denkbar, dass dem Bewegungsmechanismus bzw. Gelenkmechanismus ein Federmechanismus und/oder eine mechanische Blockierung zugeordnet ist, welche ausgebildet ist, den Scharnierarm und den Hebel zusammenzuhalten, wenn der Mitnehmer in Kontakt mit dem Scharnierarm tritt oder getreten ist.

Gemäß Ausführungsvarianten des erfindungsgemäßen Betätigungsmechanismus ist vorgesehen, dass die Abdeckung von der Offenstellung in eine Wetterschutzstellung bewegbar ist, in welcher die Abdeckung um die erste Drehachse des Hebels teilweise zurück in die Schließstellung verdreht ist.

In einer weiteren alternativen oder zusätzlichen Ausführungsform des erfindungsgemäßen Betätigungsmechanismus ist vorgesehen, dass die Abdeckung auf der Rückseite ein Fluidkanalsystem mit mindestens einem Fluidkanal aufweist, wobei das Fluidkanalsystem insbesondere ausgebildet ist, dass in der Offenstellung der Abdeckung der mindestens eine Fluidkanal eine fluidmäßige Verbindung zu einem Einfüllstutzen des Fahrzeugs ausbildet.

Die Erfindung betrifft ferner eine Anordnung, insbesondere Sensor-, vorzugsweise LIDAR-System-Anordnung, oder Lade-, Service- oder Tankanordnung für Fahrzeuge, wobei die Anordnung eine Mulde, insbesondere Sensor-, insbesondere LIDAR-System-Mulde, oder Lade-, Service- oder Tankmulde sowie eine Abdeckung zum Abdecken der Mulde aufweist. Die Abdeckung ist reversibel zwischen einer Schließstellung, in welcher die Abdeckung bündig mit einer Fahrzeugaußenhaut angeordnet ist, und einer Offenstellung, in welcher die Abdeckung hinter der Außenhaut angeordnet ist, bewegbar und insbesondere verschwenkbar.

Hierzu weist die erfindungsgemäße Anordnung insbesondere einen Betätigungsmechanismus der zuvor genannten erfindungsgemäßen Art auf.

Insbesondere ist in diesem Zusammenhang vorgesehen, dass die Antriebswelle und/oder die Antriebsfläche des Antriebs des Betätigungsmechanismus hinter der Mulde angeordnet ist.

Die Erfindung betrifft ferner ein Fahrzeug mit einer Sensor-, insbesondere LIDAR-System-Anordnung, oder mit einer Lade-, Service- oder Tankanordnung der zuvor genannten erfindungsgemäßen Art.

Nachfolgend werden Ausführungsformen der vorliegenden Erfindung anhand der beiliegenden Zeichnungen näher beschrieben.

Es zeigen:

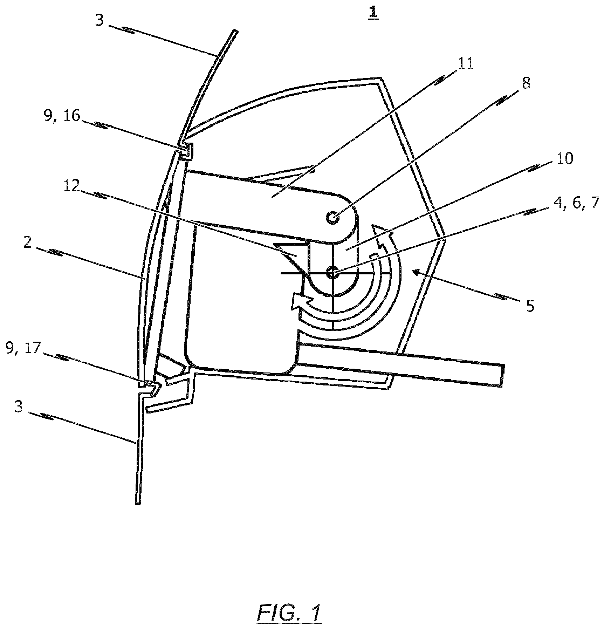

- FIG. 1: schematisch und in einer Querschnittsansicht eine erste exemplarische Ausführungsform des erfindungsgemäßen Betätigungsmechanismus, wobei die Abdeckung der Lade-, Service- oder Tankanordnung in ihrer Schließstellung vorliegt;

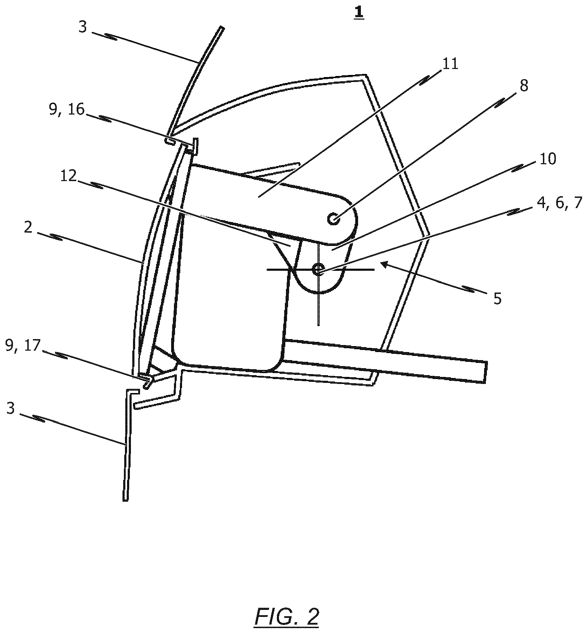

- FIG. 2: schematisch und in einer Querschnittsansicht die erste exemplarische Ausführungsform des erfindungsgemäßen Betätigungsmechanismus gemäß FIG. 1, wobei die Abdeckung der Lade-, Service- oder Tankanordnung von ihrer Schließstellung gemäß FIG. 1 in einer insbesondere nach dem Superpositionsprinzip überlagerten Dreh- und Translationsbewegung nach innen, das heißt in die Mulde der Lade-, Service- oder Tankanordnung, hinein in ihre Zwischenstellung bewegt vorliegt;

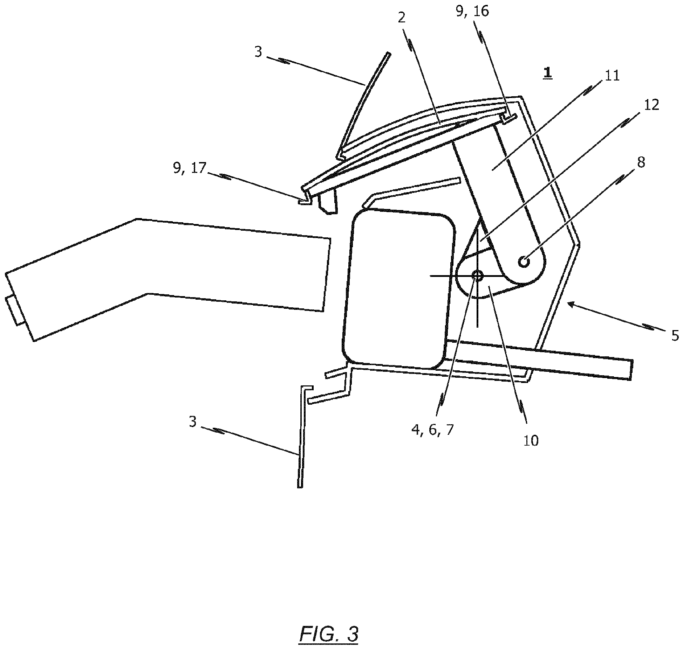

- FIG. 3: schematisch und in einer Querschnittsansicht die erste exemplarische Ausführungsform des erfindungsgemäßen Betätigungsmechanismus gemäß FIG. 1, wobei die Abdeckung der Lade-, Service- oder Tankanordnung von ihrer Zwischenstellung gemäß FIG. 2 in einer zumindest im Wesentlichen rein-rotatorischen Bewegung in ihre Offenstellung verschwenkt vorliegt;

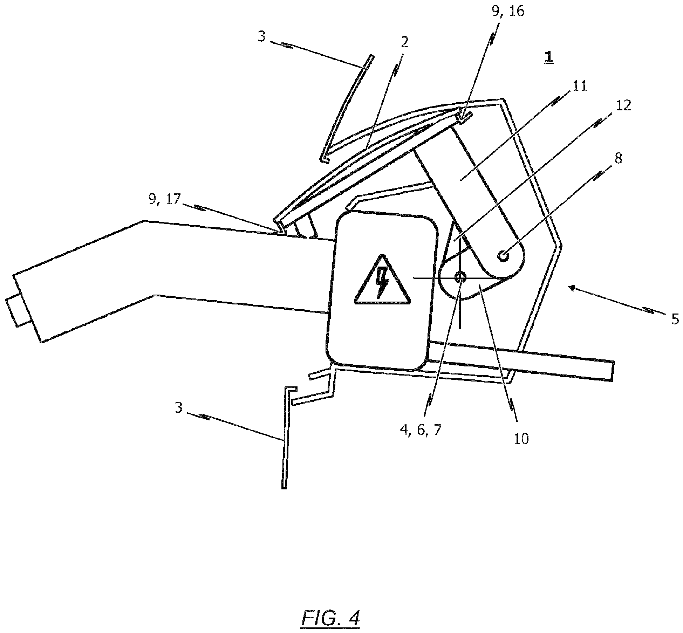

- FIG. 4: schematisch und in einer Querschnittsansicht die erste exemplarische Ausführungsform des erfindungsgemäßen Betätigungsmechanismus gemäß FIG. 1, wobei die Abdeckung der Lade-, Service- oder Tankanordnung von ihrer Offenstellung gemäß FIG. 3 in einer zumindest im Wesentlichen rein-rotatorischen Bewegung in ihrer Wetterschutzstellung verschwenkt vorliegt;

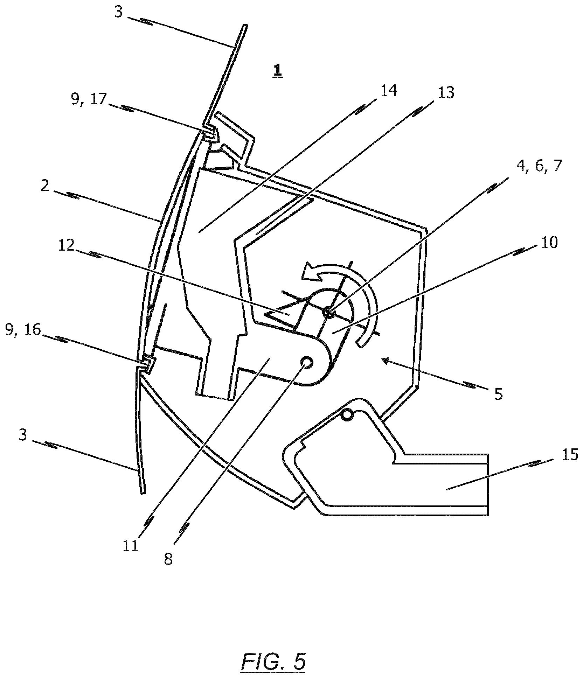

- FIG. 5: schematisch und in einer Querschnittsansicht eine zweite exemplarische Ausführungsform des erfindungsgemäßen Betätigungsmechanismus, wobei die Abdeckung der Lade-, Service- oder Tankanordnung in ihrer Schließstellung vorliegt;

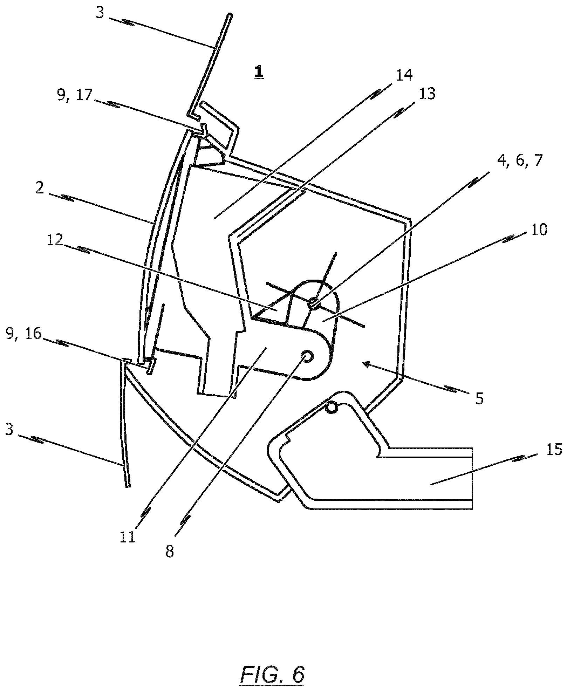

- FIG. 6: schematisch und in einer Querschnittsansicht die zweite exemplarische Ausführungsform des erfindungsgemäßen Betätigungsmechanismus gemäß FIG. 5, wobei die Abdeckung der Lade-, Service- oder Tankanordnung von ihrer Schließstellung gemäß FIG. 5 in einer insbesondere nach dem Superpositionsprinzip überlagerten Dreh- und Translationsbewegung nach innen, das heißt in die Mulde der Lade-, Service- oder Tankanordnung, hinein in die Zwischenstellung bewegt vorliegt; und

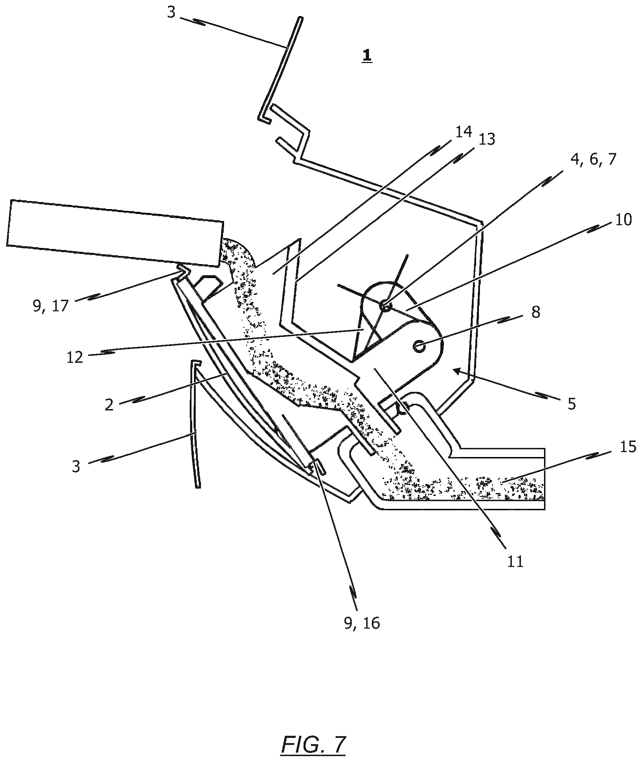

- FIG. 7: schematisch und in einer Querschnittsansicht die zweite exemplarische Ausführungsform des erfindungsgemäßen Betätigungsmechanismus gemäß FIG. 5, wobei die Abdeckung der Lade-, Service- oder Tankanordnung von ihrer Zwischenstellung gemäß FIG. 6 in einer zumindest im Wesentlichen rein-rotatorischen Bewegung in ihrer Offenstellung verschwenkt vorliegt.

In FIG. 1 ist schematisch und in einer Querschnittsansicht eine erste exemplarische Ausführungsform des erfindungsgemäßen Betätigungsmechanismus 1 gezeigt, wobei die Abdeckung 2 in ihrer Schließstellung vorliegt.

In FIG. 2 ist die Abdeckung 2 in einer nach dem Superpositionsprinzip überlagerten Dreh- und Translationsbewegung in ihre Zwischenstellung bewegt.

In FIG. 3 ist die Abdeckung 2 dann in einer reinen Rotationsbewegung in ihrer Offenstellung bewegt, während in FIG. 4 die Abdeckung 2 in einer Wetterschutzstellung vorliegt.

Der Betätigungsmechanismus 1 weist einen in den Zeichnungen nicht näher gezeigten Antrieb, insbesondere in Gestalt eines Elektromotors, mit einer Antriebswelle 3 auf. Darüber hinaus umfasst der Betätigungsmechanismus 1 einen insbesondere mit der Rückseite der Abdeckung 2 und mit dem Antrieb wirkverbundenen Bewegungsmechanismus bzw. Gelenkmechanismus 5.

Der Zusammenschau von FIG. 1 bis FIG. 4 ist zu entnehmen, dass bei Betätigung des Antriebs ausgehend von der Schließstellung der Abdeckung 2 gemäß FIG. 1 diese zunächst in einer insbesondere nach dem Superpositionsprinzip überlagerten Dreh- und Translationsbewegung in die Zwischenstellung gemäß FIG. 2 bewegt wird, in welcher sich die Abdeckung 2 in einer Stellung befindet, in welcher die Abdeckung 2 relativ zu der Schließstellung der Abdeckung 2 um eine erste Drehachse 6 verschwenkt und sich zumindest teil- oder bereichsweise hinter der Fahrzeugkarosserie und insbesondere Fahrzeugaußenhaut 3 befindet.

Bei einer weiteren Betätigung des Antriebs wird ausgehend von der Zwischenstellung der Abdeckung 2 gemäß FIG. 2 diese anschließend in einer zumindest im Wesentlichen und vorzugsweise rein-rotatorischen Bewegung um eine zweite Drehachse 7 in die Offenstellung verschwenkt, in welcher die Abdeckung 2 zumindest teil- oder bereichsweise hinter der Fahrzeugkarosserie und insbesondere hinter der Fahrzeugaußenhaut 3 angeordnet ist.

Bei den in den Zeichnungen gezeigten Ausführungsformen ist vorgesehen, dass die erste Drehachse 6, um welche die Abdeckung 2 in der insbesondere nach dem Superpositionsprinzip überlagerten Dreh- und Translationsbewegung in die Zwischenstellung bewegbar ist, mit der zweiten Drehachse 7 übereinstimmt, um welche die Abdeckung 2 ausgehend von ihrer Zwischenstellung in die Offenstellung verschwenkbar ist. Insbesondere ist dabei vorgesehen, dass die erste und zweite Drehachse 6, 7 mit der Drehachse der Antriebswelle 3 des Antriebs übereinstimmen.

In den Zeichnungen ist ferner angedeutet, dass der Abdeckung 2 eine insbesondere teil- oder bereichsweise die Abdeckung 2 umlaufende Dichtung 9 zugeordnet ist, welche ausgebildet ist, zumindest in der Schließstellung der Abdeckung 2 (vgl. beispielsweise FIG. 1 oder FIG. 5) einen Bereich zwischen der Abdeckung 2 und der Fahrzeugkarosserie und insbesondere der Fahrzeugaußenhaut 3 abzudichten.

Der Bewegungsmechanismus bzw. Gelenkmechanismus 5 ist dabei ausgebildet, bei Betätigung des Antriebs ausgehend von der Schließstellung (vgl. beispielsweise FIG. 1 oder FIG. 5) die Abdeckung 2 derart in der insbesondere nach dem Superpositionsprinzip überlagerten Dreh- und Translationsbewegung in die Zwischenstellung zu bewegen (vgl. FIG. 2 oder FIG. 6), dass sich die insbesondere teil- oder bereichsweise die Abdeckung 2 umlaufende Dichtung 9 in einem ersten Bereich 16 der Dichtung 9 (hier: in einem oberen Bereich der Dichtung 9 bei FIG. 1 bis FIG. 4 bzw. in einem unteren Bereich der Dichtung 9 bei FIG. 5 bis FIG. 7) schneller relativ zu der Abdeckung 2 oder zu der Fahrzeugkarosserie bewegt als in einem insbesondere dem ersten Bereich 16 der Dichtung 9 gegenüberliegenden zweiten Bereich 17 der Dichtung 9.

Sowohl die erste als auch die zweite exemplarische Ausführungsform des in den Zeichnungen gezeigten Betätigungsmechanismus 1 haben gemeinsam, dass der Bewegungsmechanismus bzw. Gelenkmechanismus 5 einen um die erste Drehachse 6 drehbar gelagerten Hebel 10, insbesondere Ausdrückhebel, und einen Scharnierarm 11 aufweist, wobei ein erster Endbereich des Scharnierarms 11 vorzugsweise fest mit insbesondere der Rückseite der Abdeckung 2 verbunden oder verbindbar ist. Andererseits ist ein gegenüberliegender zweiter Endbereich des Scharnierarms 11 gelenkig mit dem Hebel 10 verbunden.

Hierbei ist vorgesehen, dass zumindest über einen vorab festgelegten oder festlegbaren Winkelbereich der Scharnierarm 11 über seinen zweiten Endbereich um eine dritte Drehachse 8 relativ zu dem Hebel 10 verschwenkbar ist, wobei die dritte Drehachse 8 vorzugsweise parallel zu der ersten Drehachse 6 verläuft, um den der Hebel 10 drehbar gelagert ist.

Die Ausführungsformen des erfindungsgemäßen Betätigungsmechanismus 1, wie sie in den Zeichnungen gezeigt sind, haben ferner gemeinsam, dass der Hebel 10 einen Mitnehmer 12 aufweist, welcher ausgebildet ist, bei Bewegung des Hebels 10 den Scharnierarm 11 ebenfalls in Bewegung und insbesondere in Drehung zu versetzen.

Insbesondere ist der Mitnehmer 12 ausgebildet, ausgehend von einer Ruheposition des Hebels 10, in welcher die Abdeckung 2 in ihrer Schließstellung vorliegt (vgl. FIG. 1 oder FIG. 5), erst nach Verdrehung des Hebels 10 um einen vorab festgelegten oder festlegbaren Winkelbereich um die erste Drehachse 6 des Hebels 10 in Kontakt mit dem Scharnierarm 11 zu treten (vgl. FIG. 2 und FIG. 6), wobei dann und bei einem weiteren Verdrehen des Hebels 10 der Hebel 10 zusätzlich mit dem Scharnierarm 11 um die erste Drehachse 6 des Hebels 10 verschwenkt wird (vgl. FIG. 3 und FIG. 7).

Wie in FIG. 4 gezeigt, ist es insbesondere denkbar, dass die Abdeckung 2 von der Offenstellung in eine Wetterschutzstellung bewegbar ist, in welcher die Abdeckung 2 um die erste Drehachse 6 des Hebels 10 teilweise zurück in die Schließstellung verdreht ist.

Gemäß der in FIG. 5 bis FIG. 7 gezeigten zweiten exemplarischen Ausführungsform kann die Abdeckung 2 auf der Rückseite ein Fluidkanalsystem 13 mit mindestens einem Fluidkanal 14 aufweisen, wobei das Fluidkanalsystem 13 ausgebildet ist, dass in der Offenstellung der Abdeckung 2 der mindestens eine Fluidkanal 14 eine fluidmäßige Verbindung zu einem Einfüllstutzen 15 des Fahrzeugs ausbildet.

Die Erfindung ist nicht auf die in den Zeichnungen gezeigte Ausführungsform beschränkt, sondern ergibt sich aus einer Zusammenschau sämtlicher hierin offenbarter Merkmale.

### Bezugszeichenliste

- 1: Betätigungsmechanismus
- 2: Abdeckung/Klappe
- 3: Fahrzeugkarosserie/Fahrzeugaußenhaut
- 4: Antriebswelle
- 5: Gelenkmechanismus
- 6: erste Drehachse
- 7: zweite Drehachse
- 8: dritte Drehachse
- 9: Dichtung
- 10: Hebel/Ausdrückhebel
- 11: Scharnierarm
- 12: Mitnehmer
- 13: Fluidkanalsystem
- 14: Fluidkanal
- 15: Einfüllstutzen
- 16: erster Bereich der Dichtung
- 17: zweiter Bereich der Dichtung

## Patentansprüche

1. Betätigungsmechanismus (1) zum Betätigen einer Abdeckung (2) eines Fahrzeugs, insbesondere einer Abdeckung (2) in Gestalt einer Lade-, Service- oder Tankklappen eines Fahrzeugs oder in Gestalt einer Klappe zur Sensor- und insbesondere LIDAR-System-Abdeckung (2) eines Fahrzeugs, wobei die Abdeckung (2) reversibel zwischen einer Schließstellung, in welcher die Abdeckung (2) insbesondere bündig und vorzugsweise strakbündig mit einer Fahrzeugkarosserie und insbesondere Fahrzeugaußenhaut (3) angeordnet ist, und einer Offenstellung bewegbar ist, in welcher die Abdeckung (2) zumindest teil- oder bereichsweise hinter der Fahrzeugkarosserie und insbesondere Fahrzeugaußenhaut (3) angeordnet ist, wobei der Betätigungsmechanismus (1) einen insbesondere mit der Rückseite der Abdeckung (2) wirkverbundenen Bewegungsmechanismus (5), insbesondere in Gestalt eines Gelenk- oder Führungsmechanismus, aufweist,
**dadurch gekennzeichnet, dass**
der Bewegungsmechanismus (5) ausgebildet ist:
(a) zum Überführen der Abdeckung (2) von der Schließstellung in die Offenstellung ausgehend von der Schließstellung der Abdeckung (2) diese zunächst in einer insbesondere nach dem Superpositionsprinzip überlagerten Dreh- und Translationsbewegung in eine Zwischenstellung zu bewegen, in welcher sich die Abdeckung (2) in einer Stellung befindet, in welcher die Abdeckung (2) relativ zu der Schließstellung der Abdeckung (2) um eine erste Drehachse (6) verschwenkt ist und sich zumindest teil- oder bereichsweise - im Vergleich zu der Schließstellung - zurückversetzt in Richtung des Fahrzeuginneren befindet; und
(b) ausgehend von der Zwischenstellung der Abdeckung (2) diese anschließend in einer zumindest im Wesentlichen und vorzugsweise rein-rotatorischen Bewegung um eine zweite Drehachse (7) in die Offenstellung zu verschwenken, in welcher die Abdeckung (2) zumindest teil- oder bereichsweise hinter der Fahrzeugkarosserie und insbesondere hinter der Fahrzeugaußenhaut (3) angeordnet ist.

2. Betätigungsmechanismus (1) nach Anspruch 1,
wobei die erste Drehachse (6), um welche die Abdeckung (2) in der insbesondere nach dem Superpositionsprinzip überlagerten Dreh- und Translationsbewegung in die Zwischenstellung bewegbar ist, mit der zweiten Drehachse (7) übereinstimmt, um welche die Abdeckung (2) ausgehend von ihrer Zwischenstellung in die Offenstellung verschwenkbar ist.

3. Betätigungsmechanismus (1) nach Anspruch 1 oder 2,
der Betätigungsmechanismus (1) ferner einen Antrieb, insbesondere in Gestalt eines Elektromotors, mit einer Antriebswelle (4) aufweist, wobei der Antrieb mit dem Bewegungsmechanismus (5) wirkverbunden ist, wobei die erste und/oder zweite Drehachse (6, 7) mit einer Drehachse der Antriebswelle (4) des Antriebs übereinstimmen/übereinstimmt.

4. Betätigungsmechanismus (1) nach einem der Ansprüche 1 bis 3, wobei der Abdeckung (2) eine insbesondere teil- oder bereichsweise die Abdeckung (2) umlaufende Dichtung (9) zugeordnet ist, welche ausgebildet ist, zumindest in der Schließstellung der Abdeckung (2) einen Bereich zwischen der Abdeckung (2) und der Fahrzeugkarosserie und insbesondere der Fahrzeugaußenhaut (3) abzudichten, wobei der Bewegungsmechanismus (5) ausgebildet ist, beim Überführen der Abdeckung (2) von der Schließstellung in die Offenstellung ausgehend von der Schließstellung der Abdeckung (2) diese derart in der insbesondere nach dem Superpositionsprinzip überlagerten Dreh- und Translationsbewegung in die Zwischenstellung zu bewegen, dass sich die insbesondere teil- oder bereichsweise die Abdeckung (2) umlaufende Dichtung (9) in einem ersten Bereich (16) der Dichtung (9) schneller relativ zu der Abdeckung (2) oder zu der Fahrzeugkarosserie und insbesondere Fahrzeugaußenhaut (3) bewegt als in einem insbesondere dem ersten Bereich (16) der Dichtung (9) gegenüberliegenden zweiten Bereich (17) der Dichtung (9).

5. Betätigungsmechanismus (1) nach einem der Ansprüche 1 bis 4, wobei der Bewegungsmechanismus (5) einen um die erste Drehachse (6) drehbar gelagerten Hebel (10), insbesondere Ausdrückhebel, und einen Scharnierarm (11) aufweist, wobei ein erster Endbereich des Scharnierarms (11) vorzugsweise fest mit insbesondere der Rückseite der Abdeckung (2) verbunden oder verbindbar ist, und wobei ein gegenüberliegender zweiter Endbereich des Scharnierarms (11) gelenkig mit dem Hebel (10) verbunden ist.

6. Betätigungsmechanismus (1) nach Anspruch 5,
wobei zumindest über einen vorab festgelegten oder festlegbaren Winkelbereich der Scharnierarm (11) über seinen zweiten Endbereich um eine dritte Drehachse (8) relativ zu dem Hebel (10) verschwenkbar ist, wobei die dritte Drehachse (8) vorzugsweise parallel zu der ersten Drehachse (6) verläuft, um den der Hebel (10) drehbar gelagert ist.

7. Betätigungsmechanismus (1) nach Anspruch 5 oder 6,
wobei der Hebel (10) einen Mitnehmer (12) aufweist, welcher ausgebildet ist, bei Bewegung des Hebels (10) den Scharnierarm (11) ebenfalls in Bewegung und insbesondere in Drehung zu versetzen.

8. Betätigungsmechanismus (1) nach Anspruch 7,
wobei der Mitnehmer (12) ausgebildet ist, ausgehend von einer Ruheposition des Hebels (10), in welcher die Abdeckung (2) in ihrer Schließstellung vorliegt, erst nach Verdrehung des Hebels (10) um einen vorab festgelegten oder festlegbaren Winkelbereich um die erste Drehachse (6) des Hebels (10) in Kontakt mit dem Scharnierarm (11) zu treten, wobei dann und bei einem weiteren Verdrehen des Hebels (10) der Hebel (10) zusätzlich mit dem Scharnierarm (11) um die erste Drehachse (6) des Hebels (10) verschwenkt wird.

9. Betätigungsmechanismus (1) nach Anspruch 8,
wobei nach Verdrehung des Hebels (10) um den vorab festgelegten oder festlegbaren Winkelbereich um die erste Drehachse (6) des Hebels (10) die Abdeckung (2) in ihrer Zwischenstellung vorliegt.

10. Betätigungsmechanismus (1) nach Anspruch 8 oder 9,
wobei dem Bewegungsmechanismus (5) ein Federmechanismus und/oder eine mechanische Blockierung zugeordnet ist, welche ausgebildet ist, den Scharnierarm (11) und den Hebel (10) zusammenzuhalten, wenn der Mitnehmer (12) in Kontakt mit dem Scharnierarm (11) tritt oder getreten ist.

11. Betätigungsmechanismus (1) nach einem der Ansprüche 1 bis 10 in Kombination mit zumindest Anspruch 5, wobei die Abdeckung (2) von der Offenstellung in eine Wetterschutzstellung bewegbar ist, in welcher die Abdeckung (2) um die erste Drehachse (6) des Hebels (10) teilweise zurück in die Schließstellung verdreht ist.

12. Betätigungsmechanismus (1) nach einem der Ansprüche 1 bis 11, wobei die Abdeckung (2) auf der Rückseite ein Fluidkanalsystem (13) mit mindestens einem Fluidkanal (14) aufweist.

13. Betätigungsmechanismus (1) nach Anspruch 12,
wobei das Fluidkanalsystem (13) ausgebildet ist, dass in der Offenstellung der Abdeckung (2) der mindestens eine Fluidkanal (14) eine fluidmäßige Verbindung zu einem Einfüllstützen (15) des Fahrzeugs ausbildet.

14. Anordnung, insbesondere Sensor-, vorzugsweise LIDAR-System-Anordnung, oder Lade-, Service-, oder Tankanordnung für Fahrzeuge, wobei die Anordnung Folgendes aufweist:
- eine Mulde, insbesondere Sensor-, insbesondere LIDAR-System-Mulde, oder Lade-, Service- oder Tankmulde;
- eine Abdeckung (2) zum Abdecken der Mulde, wobei die Abdeckung (2) reversibel zwischen einer Schließstellung, in welcher die Abdeckung (2) bündig mit einer Fahrzeugaußenhaut (3) angeordnet ist, und einer Offenstellung, in welcher die Abdeckung (2) hinter der Außenhaut angeordnet ist, bewegbar und insbesondere verschwenkbar ist; und
- einen Betätigungsmechanismus (1) nach einem der Ansprüche 1 bis 13, wobei die Antriebswelle (4) des Antriebs vorzugsweise hinter der Mulde angeordnet ist.

15. Fahrzeug mit einer Sensor-, insbesondere LIDAR-System-Anordnung oder mit einer Lade-, Service-, oder Tankanordnung nach Anspruch 14.
